# EUROPEAN PATENT APPLICATION

(11) **EP 4 482 025 A2**
(43) Date of publication of application: **25.12.2024**
(21) Application number: 24183682.4
(22) Date of filing: 21.06.2024
(51) Int. Cl.: H02S 50/10, H02S 50/15

(54) **MONITORING SYSTEM OF A PHOTOVOLTAIC PLANT, MONITORING METHOD OF A PHOTOVOLTAIC PLANT AND PHOTOVOLTAIC PLANT**

(30) Priority: 23.06.2023 IT 202300013044
(71) Applicant: Eco Efficiency S.r.l., 20124 Milano (IT)
(72) Inventor: TRAVERSI, Marco, I-10136 TORINO (IT)
(74) Representative: Cristinelli, Luca

(57) **Abstract**

A monitoring system of a photovoltaic system is described, which monitoring system comprises at least one photovoltaic panel (10) and comprises optical sensor means (20) arranged to acquire optical data relating to a solar radiation receiving surface (11) of at least one photovoltaic panel (10), thermal sensor means (30) arranged to acquire thermal data relating to cells (31) of at least one photovoltaic panel (10), sensor means of an electrical quantity (40) arranged to measure a performance value indicative of the amount of electrical energy generated by at least one photovoltaic panel (10), and electronic control means (50) arranged to receive said optical data from the optical sensor means (20), thermal data from the thermal sensor means (30), and the performance value from the sensor means of an electrical quantity (40).

The electronic control means (50) are also arranged to determine that at least one photovoltaic panel (10) is operating with reduced performance based on the performance value.

When the control means (50) determine that at least one photovoltaic panel (10) is operating with reduced performance, they are arranged to determine whether the solar radiation receiving surface (11) of a photovoltaic panel (10) operating with reduced performance is damaged (12) or dirty (13) based on the optical data received and to determine whether at least one cell (31) of the photovoltaic panel (10) operating with reduced performance is damaged based on the thermal data received.

## Description

### Technical field

The present invention is generally in the field of photovoltaic systems; in particular, the invention relates to a monitoring system of a photovoltaic system, a corresponding monitoring method of a photovoltaic system, and a photovoltaic system.

### Prior art

Known photovoltaic systems usually comprise at least one photovoltaic panel, at least one inverter, and possibly at least one optimizer.

A photovoltaic panel usually comprises a frame and a solar radiation receiving surface arranged to be coupled to the frame. The photovoltaic panel further comprises one or more cells arranged to be housed in the frame, below the solar radiation receiving surface.

The solar radiation receiving surface may, for example, be made of a material that allows the passage of solar radiation so that the cells may receive such solar radiation and may convert it into electricity. For example, the solar radiation receiving surface may be made of glass.

In general, an inverter is the element of a photovoltaic system that allows the direct current (DC) generated by the cells of the photovoltaic panels to be converted into an alternating current (AC) that may be used, for example, in homes or commercial buildings.

An optimizer is a component that allows the performance of individual photovoltaic solar panels to be optimized, when, for example, a total or partial darkening of a photovoltaic panel of the system occurs.

Disadvantageously, in the prior art, should a performance drop in the electrical energy generation of a photovoltaic panel occur, it is not possible to determine which element of such photovoltaic panel is not operating properly or is damaged.

Therefore, in order to repair the damage or malfunction, a field intervention will be required by a maintenance worker who will have to spend time tracing the damaged or malfunctioning component.

Such operation involves a considerable waste of time, during which the performance of the photovoltaic panel is compromised.

Furthermore, only during the field investigation will the maintenance worker be able to find out which replacement element or working tool will be required to resolve the fault or malfunction. Therefore, in some cases, such maintenance worker may not immediately have the necessary replacement element or working tool in the field. As a result, the time allowed for repair will be further lengthened due to the need to provide the necessary replacement element or working tool.

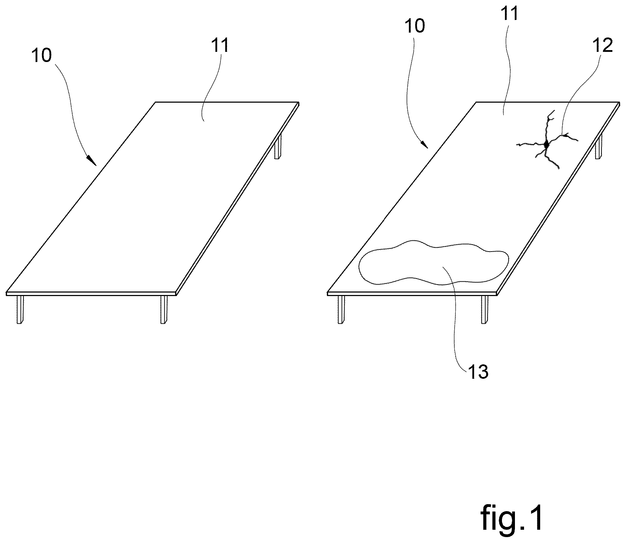

By way of example, the left side of Fig. 1 shows a photovoltaic panel according to the prior art in a non-damaged and clean condition. On the other hand, the right side of Fig. 1 shows a photovoltaic panel according to the prior art in a condition in which there is structural damage and a part of the photovoltaic panel is obscured due to dirt.

### Summary of the invention

An object of the present invention is therefore to provide solutions that allow for identifying which element of a photovoltaic panel is not operating correctly (or is damaged) and is the cause of the degraded/reduced performance of the photovoltaic panel without the need for an intervention in the field by a maintenance worker.

A further object is to provide solutions which make it possible to reduce the time required to restore the proper functioning of the photovoltaic panel which is not operating correctly or which is damaged.

The aforesaid and other objects and advantages are achieved, according to one aspect of the invention, by a monitoring system of a photovoltaic system comprising at least one photovoltaic panel having the features defined in claim 1, according to a further aspect, by a photovoltaic system having the features defined in claim 14, and according to a still further aspect, by a monitoring method of a photovoltaic system comprising at least one photovoltaic panel having the features defined in claim 15. Preferred embodiments of the invention are defined in the dependent claims, the content of which is to be understood as an integral part of the present description.

### Brief description of the drawings

The functional and structural features of some preferred embodiments of a monitoring system of a photovoltaic system comprising at least one photovoltaic panel 10, a corresponding method, and a photovoltaic system according to the invention will now be described. Reference is made to the accompanying drawings, wherein:
- Fig. 1 shows a photovoltaic system according to the prior art;
- Fig. 2 shows a first embodiment of a monitoring system of a photovoltaic system according to the invention;
- Fig. 3 shows a further embodiment of a monitoring system of a photovoltaic system according to invention.

### Detailed description

Before explaining in detail a plurality of embodiments of the invention, it should be clarified that the invention is not limited in the application thereof to the design details and configuration of the components presented in the following description or shown in the drawings. The invention may assume other embodiments and be implemented or constructed in practice in different ways. It should also be understood that the phraseology and terminology have a descriptive purpose and should not be construed as limiting. The use of "include" and "comprise" and the variations thereof are intended to cover the elements set out below and the equivalents thereof, as well as additional elements and the equivalents thereof.

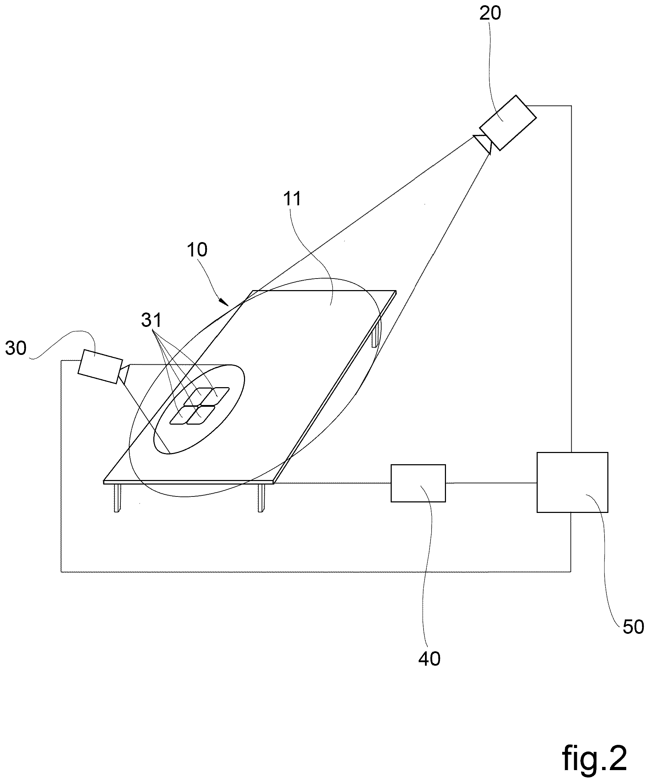

Referring initially to Fig. 2, an embodiment of a monitoring system of a photovoltaic system comprising at least one photovoltaic panel 10 is described below.

The monitoring system comprises optical sensor means 20 arranged to acquire optical data relating to a solar radiation receiving surface 11 of the at least one photovoltaic panel 10, thermal sensor means 30 arranged to acquire thermal data relating to cells 31 of the at least one photovoltaic panel 10, and sensor means of an electrical quantity 40 arranged to measure a performance value indicative of the amount of electrical energy generated by said at least one photovoltaic panel 10.

The electrical quantity may be any electrical quantity indicative of the amount of electrical energy generated by said at least one photovoltaic panel. For example, the electrical quantity may be an electrical current, an electrical voltage, an electrical power, etc.

The monitoring system further comprises electronic control means 50 arranged to receive the optical data from the optical sensor means 20, the thermal data from the thermal sensor means 30, and the performance value from said sensor means of an electrical quantity 40.

For example, the electronic control means 50 may comprise or be at least one processor, microprocessor, controller, microcontroller, FPGA, PLC, or the like.

For example, the electronic control means 50 may receive the optical data, the thermal data, and the performance value through communication means. The communication means may be or comprise a wired line or a wireless line (e.g. Bluetooth or Wi-Fi).

The electronic control means 50 are further arranged to determine that the at least one photovoltaic panel 10 is operating with reduced performance based on the performance value measured by said sensor means of an electrical quantity.

"Reduced performance" (also called "limited performance") may, for example, be understood as a condition in which the photovoltaic panel 10 is not producing the amount of electrical energy expected in a condition of normal operation of the photovoltaic panel 10. In the present disclosure, the terms "reduced performance" and "limited performance" may be considered synonyms having the same meaning and may be used interchangeably without changing the meaning expressed.

When the electronic control means 50 determine that the at least one photovoltaic panel 10 is operating at a reduced performance, the electronic control means 50 are arranged for:
- determining whether the solar radiation receiving surface 11 of the at least one photovoltaic panel 10 operating with reduced performance is damaged 12 or dirty 13 based on the optical data received;
- determining whether at least one cell 31 of the at least one photovoltaic panel 10 operating with reduced performance is damaged based on the thermal data received.

Preferably, the electronic control means may be arranged to determine that the at least one photovoltaic panel 10 is operating at a reduced performance when the performance value of such photovoltaic panel 10 is lower than a predetermined minimum performance value.

For example, the minimum performance value may be variable over a day based on the time of day and the resulting differing solar radiation values.

Such performance value may also be variable based on the time of year and the resulting differing average solar radiation values.

Preferably, the thermal sensor means 30 may comprise at least one thermal camera.

Preferably, the electronic control means 40 may be arranged to determine that at least one cell 31 of the at least one photovoltaic panel 10 operating with reduced performance is damaged when the thermal data relating to the cells 31 of such photovoltaic panel indicate that at least one cell 31 of such photovoltaic panel 10 is at a temperature higher than a predetermined maximum temperature. Alternatively or additionally, the electronic control means 50 may be arranged to determine that at least one cell 31 of the at least one photovoltaic panel 10 operating with reduced performance is damaged when the thermal data relating to the cells 31 of such photovoltaic panel 10 indicate that at least one cell 31 of such photovoltaic panel 10 is at a temperature below a predetermined minimum temperature.

For example, the maximum or minimum temperature may be variable over a day based on the time of day and the resulting differing values of solar radiation.

The maximum temperature and minimum temperature may also be variable based on the time of year and the resulting different average solar radiation values.

Preferably, the optical sensor means 20 may comprise an optical reflectance sensor. In such a case, the optical data may comprise reflectance values relating to the solar radiation receiving surface 11 of said at least one photovoltaic panel 10.

Preferably, the electronic control means 50 may be arranged to determine that the solar radiation receiving surface 11 of said at least one photovoltaic panel operating with reduced performance is damaged 12 or dirty 13 when the reflectance value relating to the solar radiation receiving surface 11 of said photovoltaic panel 10 is lower than a predetermined minimum reflectance value.

Preferably, said optical sensor means 20 may comprise image acquisition means. In such a case, the optical data may comprise images of the solar radiation receiving surface 11 of said at least one photovoltaic panel 10.

Preferably, the electronic control means 50 may be arranged to determine a degree of similarity between the images of the solar radiation receiving surface 11 of said at least one photovoltaic panel 10 acquired by said optical sensor means 20 and predetermined images of damaged 12 or dirty 13 solar radiation receiving surfaces 11. In such a case, the electronic control means 50 may be arranged to determine that the solar radiation receiving surface 11 of said at least one photovoltaic panel 10 operating with reduced performance is damaged 12 or dirty 13 when the degree of similarity determined for an image of the solar radiation receiving surface 11 of said photovoltaic panel 10, acquired by the image acquisition means, is greater than a predetermined minimum degree of similarity.

For example, such degree of similarity may be calculated using a mean square error (MSE) function.

Preferably, the sensor means of an electrical quantity 40 may comprise a current sensor or a voltage sensor.

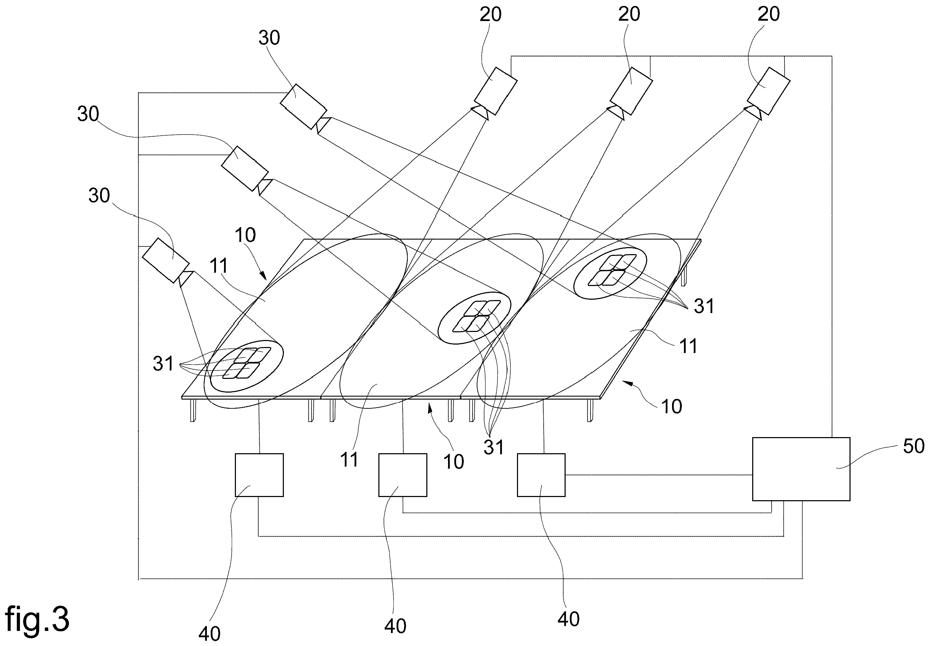

As may be observed in Fig. 3, said photovoltaic system may comprise a plurality of photovoltaic panels 10. In such a case, the optical sensor means may be arranged to acquire optical data relating to the solar radiation receiving surfaces 11 of said photovoltaic panels 10, the thermal sensor means 20 may be arranged to acquire thermal data relating to cells 31 of said photovoltaic panels 10, and the sensor means of an electrical quantity 40 may be arranged to measure respective performance values indicative of the amount of electrical energy generated respectively by said photovoltaic panels 10.

For example, as may be observed in Fig. 3, respective thermal sensor means 30, respective optical sensor means 20, and respective sensor means of an electrical quantity 40 may be provided for each photovoltaic panel 10. In an alternative embodiment, not illustrated in the figures, the thermal sensor means 30, the optical sensor means 20, and the sensor means of an electrical quantity 40 may be common to a plurality of photovoltaic panels 10 or to all of the photovoltaic panels 10 of the photovoltaic system.

Preferably, the electronic control means 50 may be arranged to determine that at least one photovoltaic panel 10 is operating with reduced performance when the performance value of such photovoltaic panel 10 is lower, by at least a predetermined threshold, than the performance values of the other photovoltaic panels 10.

Preferably, the electronic control means 50 are arranged to determine that the solar radiation receiving surface 11 of a photovoltaic panel 10 operating with reduced performance is damaged 12 or dirty 13 when the reflectance value relating to the solar radiation receiving surface 11 of such photovoltaic panel 10 is lower, by at least a predetermined threshold, than the reflectance values relating to the solar radiation receiving surfaces 11 of the other photovoltaic panels 10.

Preferably, the electronic control means 50 may be further arranged for:
- sending a first alarm signal to a first user device when said control means 50 determine that the solar radiation receiving surface 11 of at least one photovoltaic panel 10 operating with reduced performance is damaged 12 or dirty 13;
- sending a second alarm signal to a second user device when said electronic control means 50 determine that at least one cell 31 of at least one photovoltaic panel 10 operating with reduced performance is damaged.

For example, the first user device may be assigned to a first person in charge of cleaning the panels, and the second user device may be assigned to a second person in charge of technical maintenance of the photovoltaic system. In this way, the monitoring system will be able to autonomously alert the correct worker in light of the detected problem. In other words, the monitoring system may implement a matching algorithm between the problem detected and the user devices assigned to the various workers.

Preferably, the monitoring system may comprise communication means for sending alarm signals. For example, the communication means may be wired or wireless.

For example, the user devices may be or comprise a smartphone, tablet, wearable electronic device, computer, or the like.

In a further aspect, the present invention relates to a photovoltaic system. Such photovoltaic system comprises at least one photovoltaic panel 10 and a monitoring system according to any of the embodiments described above.

In a still further aspect, the present invention relates to a monitoring method of a photovoltaic system comprising at least one photovoltaic panel 10. The method is implemented by electronic control means 50 and comprises the steps of:
- acquiring optical data relating to a solar radiation receiving surface 11 of said at least one photovoltaic panel 10;
- acquiring thermal data relating to cells 31 of said at least one photovoltaic panel 10;
- measuring an indicative performance value of the amount of electrical energy generated by said at least one photovoltaic panel 10;
- determining that said at least one photovoltaic panel 10 is operating with reduced performance, based on said measured performance value;
- when it is determined that said at least one photovoltaic panel is operating with reduced performance:
   a) determining whether the solar radiation receiving surface 11 of such photovoltaic panel 10 operating with reduced performance is damaged 12 or dirty 13 based on the received optical data relating to the solar radiation receiving surface 11 of such photovoltaic panel 10 operating with reduced performance;
   b) determining whether at least one cell 31 of such photovoltaic panel 10 operating with reduced performance is damaged based on the received thermal data relating to the cells 31 of such photovoltaic panel 10 operating with reduced performance.

The advantages achieved by the present invention are those of having provided solutions that allow for:
- identifying which element of a photovoltaic panel 10 that is not operating properly or that is damaged is the cause of the degraded/reduced performance of the panel 10 without the need for a field intervention by a maintenance worker;
- reducing the time required to restore the proper functioning of the photovoltaic panel 10 that is not operating properly or is damaged.

For example, the method described above may be carried out by means of software run by said electronic control means 50. For example, such electronic control means 50 may be comprised in a computer or electronic device (e.g., tablet or mobile phone).

Various aspects and embodiments of a monitoring system of a photovoltaic system, a monitoring method of a photovoltaic system, and a photovoltaic system according to the invention have been described. It is understood that each embodiment may be combined with any other embodiment. Moreover, the invention is not limited to the embodiments described, but may be varied within the scope defined by the appended claims.

## Claims

1. Monitoring system of a photovoltaic system comprising at least one photovoltaic panel (10), wherein said monitoring system comprises:
- optical sensor means (20) arranged to acquire optical data relating to a solar radiation receiving surface (11) of said at least one photovoltaic panel (10);
- thermal sensor means (30) arranged to acquire thermal data relating to cells (31) of said at least one photovoltaic panel (10);
- sensor means of an electrical quantity (40) arranged to measure a performance value indicative of the amount of electrical energy generated by said at least one photovoltaic panel (10);
- electronic control means (50) arranged to receive said optical data from said optical sensor means (20), said thermal data from the thermal sensor means (30), and said performance value from said sensor means of an electrical quantity (40);
wherein said electronic control means (50) are also arranged to determine that said at least one photovoltaic panel (10) is operating with reduced performance based on said performance value;
wherein, when said control means (50) determine that said at least one photovoltaic panel (10) is operating with reduced performance, said control means are arranged for:
- determining whether the solar radiation receiving surface (11) of said at least one photovoltaic panel (10) operating with reduced performance is damaged (12) or dirty (13) based on the optical data received;
- determining whether at least one cell (31) of the at least one photovoltaic panel (10) operating with reduced performance is damaged based on the thermal data received.

2. Monitoring system according to claim 1, wherein said electronic control means (50) are arranged to determine that the at least one photovoltaic panel (10) is operating with reduced performance when the performance value of said photovoltaic panel (10) is below a predetermined minimum performance value.

3. Monitoring system according to any one of the preceding claims, wherein said thermal sensor means (30) comprise at least one thermal camera.

4. Monitoring system according to any one of the preceding claims, wherein said electronic control means (50) are arranged to determine that at least one cell (31) of the at least one photovoltaic panel (10) operating with reduced performance is damaged when the thermal data relating to the cells (31) of said photovoltaic panel (10) indicates that at least one cell (31) of said photovoltaic panel (10) is at a temperature greater than a predetermined maximum temperature; or
wherein said electronic control means (50) are arranged to determine that at least one cell (31) of the at least one photovoltaic panel (10) operating with limited performance is damaged when the thermal data relating to the cells (31) of said photovoltaic panel (10) indicate that at least one cell (31) of said photovoltaic panel (10) is at a temperature below a predetermined minimum temperature.

5. Monitoring system according to any one of the preceding claims, wherein said:
- optical sensor means (20) comprise an optical reflectance sensor; and
- said optical data comprise reflectance values relating to the solar radiation receiving surface (11) of said at least one photovoltaic panel (10).

6. Monitoring system according to claim 5, wherein said electronic control means (50) are arranged to determine that the solar radiation receiving surface (11) of said at least one photovoltaic panel (10) operating with reduced performance is damaged (12) or dirty (13) when the reflectance value relating to the solar radiation receiving surface (11) of said photovoltaic panel (10) is less than a predetermined minimum reflectance value.

7. Monitoring system according to any one of the preceding claims, wherein said:
- optical sensor means (20) comprise image acquisition means; and
- said optical data comprise images of the solar radiation receiving surface (11) of said at least one photovoltaic panel (10).

8. Monitoring system according to claim 7, wherein said electronic control means (50) are arranged to determine a degree of similarity between images of the solar radiation receiving surface (11) of said at least one photovoltaic panel (11) acquired by said optical sensor means (20) and predetermined images of damaged (12) or dirty (13) solar radiation receiving surfaces (11);
wherein, said electronic control means (50) are arranged to determine that the solar radiation receiving surface (11) of said at least one photovoltaic panel (10) operating with reduced performance is damaged (12) or dirty (13) when the degree of similarity determined for an image of the solar radiation receiving surface (11) of said photovoltaic panel (10), acquired by the image acquisition means, is greater than a predetermined minimum degree of similarity.

9. Monitoring system according to any one of the preceding claims, wherein said sensor means of an electrical quantity (40) comprises a current sensor or a voltage sensor.

10. Monitoring system according to any one of the preceding claims, wherein said photovoltaic system comprises a plurality of photovoltaic panels (10);
wherein said optical sensor means (20) are arranged to acquire optical data relating to solar radiation receiving surfaces (11) of said photovoltaic panels (10);
wherein said thermal sensor means (30) are arranged to acquire thermal data relating to cells (31) of said photovoltaic panels (10);
wherein said sensor means of an electrical quantity (40) are arranged to measure respective performance values indicative of the amount of electrical energy generated by said photovoltaic panels (10), respectively.

11. Monitoring system according to claim 10, wherein said electronic control means (50) are arranged to determine that at least one photovoltaic panel (10) is operating with reduced performance when the performance value of said photovoltaic panel (10) is lower, by at least a predetermined threshold, than the performance values of the other photovoltaic panels (10).

12. Monitoring system according to claims 10 or 11, when dependent on claim 5, wherein said electronic control means (50) are arranged to determine that the solar radiation receiving surface (11) of a photovoltaic panel operating with reduced performance is damaged (12) or dirty (13) when the reflectance value relating to the solar radiation receiving surface (11) of said photovoltaic panel (10) is lower, by at least a predetermined threshold, than the reflectance values relating to the solar radiation receiving surfaces (11) of the other photovoltaic panels (10).

13. Monitoring system according to any one of the preceding claims, wherein said electronic control means (50) are further arranged for:
- sending a first alarm signal to a first user device when said control means determine that the solar radiation receiving surface (11) of at least one photovoltaic panel (10) operating with reduced performance is damaged (12) or dirty (13);
- sending a second alarm signal to a second user device when said electronic control means (50) determine that at least one cell (31) of at least one photovoltaic panel (10) operating with reduced performance is damaged.

14. Photovoltaic system comprising:
- at least one photovoltaic panel (10);
- a monitoring system according to any one of the preceding claims.

15. Method for monitoring a photovoltaic system comprising at least one photovoltaic panel (10), implemented via electronic control means (50), comprising the steps of:
- acquiring optical data relating to a solar radiation receiving surface (11) of said at least one photovoltaic panel (10);
- acquiring thermal data relating to cells (31) of said at least one photovoltaic panel (10);
- measuring a performance value indicative of the amount of electrical energy generated by said at least one photovoltaic panel (10);
- determining that said at least one photovoltaic panel (10) is operating with reduced performance, based on said measured performance value;
- when it is determined that said at least one photovoltaic panel (10) is operating with reduced performance:
a) determining whether the solar radiation receiving surface (11) of such photovoltaic panel (10) operating with reduced performance is damaged (12) or dirty (13) based on the received optical data relating to the solar radiation receiving surface (11) of the photovoltaic panel (10) operating with reduced performance;
b) determining whether at least one cell (31) of such photovoltaic panel (10) operating with reduced performance is damaged based on the received thermal data relating to the cells (31) of such photovoltaic panel (10) operating with reduced performance.
